(19) Europäisches Patentamt
European Patent Office
Office européen des brevets

(11) **EP 1 078 280 B1**

(12) **FASCICULE DE BREVET EUROPEEN**

(45) Date de publication et mention
de la délivrance du brevet:
**27.03.2002 Bulletin 2002/13**

(21) Numéro de dépôt: **99918028.4**

(22) Date de dépôt: **07.05.1999**

(51) Int Cl.⁷: **G01S 15/52**

(86) Numéro de dépôt international:
**PCT/FR99/01091**

(87) Numéro de publication internationale:
**WO 99/60418 (25.11.1999 Gazette 1999/47)**

(54) **PROCEDE DE DETECTION D'OBJETS MOBILES PAR SONAR ACTIF**

VERFAHREN ZUM DETEKTIEREN VON BEWEGLICHEN ZIELEN DURCH EIN AKTIVES SONAR

METHOD FOR DETECTING MOBILE OBJECTS WITH ACTIVE SONAR

(84) Etats contractants désignés:
**DE GB IT**

(30) Priorité: **15.05.1998 FR 9806179**

(43) Date de publication de la demande:
**28.02.2001 Bulletin 2001/09**

(73) Titulaire: **Thales Underwater Systems SAS
06903 Sophia Antipolis (FR)**

(72) Inventeurs:
• **DOISY, Yves,
Thomson-CSF Propriété Intellectuelle
94117 Arcueil Cedex (FR)**
• **METIVIER, Pierre,
Thomson-CSF Propriété Industri.
94117 Arcueil Cedex (FR)**

(74) Mandataire: **Desperrier, Jean-Louis
Thomson-CSF Propriété Intellectuelle,
13, Avenue du Président Salvador Allende
94117 Arcueil Cédex (FR)**

(56) Documents cités:
**WO-A-93/16398**

• **COX H; HUNG LAI: "Geometric comb waveforms
for reverberation suppression" CA
CONFERENCE ARTICLE, vol. 2, 31 octobre 1994
(1994-10-31) - 2 novembre 1994 (1994-11-02),
pages 1185-1189, XP002092783 Los Alamitos,
CA, USA, IEEE Comput. Soc. Press**
• **COX H: "Space-time processing for suppression
of bottom reverberation " CA CONFERENCE
ARTICLE , vol. 2, 30 octobre 1995 (1995-10-30) -
2 novembre 1995 (1995-11-02), pages 1296-1299,
XP002092784 Los Alamitos, CA, IEEE Comput.
Soc. Press, USA**
• **NIHAT M. BILGUTAY, JAFAR SANIIE:
"Frequency agile minimum detector for target
detection and clutter rejection" PROCEEDINGS
OF THE NATIONAL COMMUNICATIONS FORUM,
vol. 40, no. Part 2, 1986, pages 1247-1252,
XP002092785 Oak Brook, Illinois, USA**
• **PATENT ABSTRACTS OF JAPAN vol. 097, no.
010, 31 octobre 1997 (1997-10-31) & JP 09 159752
A (NEC CORP), 20 juin 1997 (1997-06-20)**

**Description**

La présente invention se rapporte aux procédés de détection des objets sous-marins mobiles à l'aide d'un sonar actif, comprenant une antenne directive, en utilisant l'effet Doppler attaché au mouvement relatif de l'objet et du sonar et en formant des voies directives à partir des signaux des transducteurs de l'antenne.

Pour détecter avec un sonar un objet mobile appelé cible, il est connu d'utiliser l'effet Doppler induit par le mouvement de la cible. Dans de tels procédés de l'art antérieur, on émet une impulsion de faible bande passante vis-à-vis du décalage Doppler de la cible, puis à la réception on corrèle simultanément les signaux reçus, avec plusieurs copies de l'impulsion émise, décalées en fréquence. Chaque copie de corrélation correspond à un décalage Doppler différent possible. La meilleure corrélation est obtenue avec une copie présentant un décalage en fréquence sensiblement égal à celui provoqué par le mouvement de la cible. Ainsi, la corrélation par plusieurs copies et l'exploitation des signaux reçus permettent de localiser une cible en distance et en azimut, et de calculer sa vitesse radiale.

Ce procédé revient à émettre un code de bande passante plus étroite que le décalage Doppler des cibles que l'on cherche à détecter. Pour cela, l'émission est constituée d'une impulsion de fréquence pure $f_o$ de durée T, pondérée en amplitude pour abaisser le niveau des lobes secondaires du spectre émis afin d'obtenir une bonne rejection spectrale. La largeur spectrale d'une telle impulsion est alors d'environ 4/T pour une pondération en $\cos^2$.

Il est connu que le milieu marin est réverbérant, surtout à cause des nombreuses hétérogénéités locales (bulles d'air, particules, plancton...) formant des diffuseurs. En outre, par petits fonds, la réverbération provenant du fond et de la surface est importante. Il s'ensuit que lorsque le spectre du signal réverbéré et le spectre de la copie se superposent dans le secteur angulaire correspondant au lobe principal de l'antenne, les performances en détection sont très mauvaises.

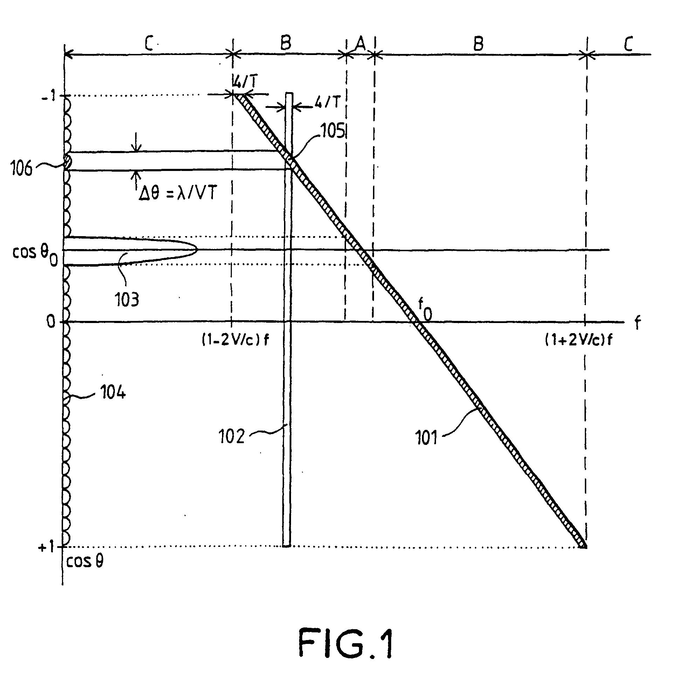

On a représenté sur la figure 1 la valeur de la fréquence f du signal reçu en fonction du cosinus de l'angle $\theta$ entre le vecteur vitesse du porteur de sonar et la direction d'un point de l'espace dans le plan gisement.

Le porteur étant animé d'une vitesse V uniforme et la fréquence émise étant $f_0$, il est connu que la fréquence reçue est donnée par $(1 + \frac{2|V|}{c} COS\ \theta)\ f_o$ où c est la célérité des ondes acoustiques dans l'eau. L'étendue du spectre du signal réverbéré par l'ensemble du volume insonifié est donc représentée par une droite inclinée 101 de largeur 4/T. Quant à la copie, elle ne dépend pas de $\theta$ et elle est représenté par une droite verticale 102 de largeur 4/T.

La zone notée A correspond au cas de réverbération indiqué précédemment. Dans cette zone, le signal réverbéré est reçu dans le lobe principal de réception 103. Il n'est éliminé ni par la directivité, ni par le filtrage Doppler.

Les zones notées B correspondent au cas où le spectre du signal réverbéré et celui de la copie se superposent en face des lobes secondaires 104 de la voie de réception. Il y a alors deux contributions à l'intensité réverbérée détectée. La première est celle des diffuseurs dans le lobe principal de la voie de réception, mais à des fréquences différentes de la cible. Ces diffuseurs sont rejetés par l'analyse spectrale. Cette dernière pouvant atteindre 40 à 50 dB en sonar, on peut négliger cette contribution. La seconde contribution correspond aux diffuseurs à la même fréquence que la cible, mais atténués par les lobes secondaires du diagramme de directivité. Dans le cas de la figure, il s'agit de l'intersection 105 des droites 101 et 102 et du lobe secondaire 106.

Le rapport "réverbération/signal " est donné par la formule :

$$R.2\Delta\theta\frac{cT}{2}.10^{-\frac{NS}{10}} \tag{1}$$

où R est la distance de la cible et NS le niveau en dB des lobes secondaires du diagramme de directivité.

L'intervalle angulaire $\Delta\theta$ correspondant au recouvrement des spectres de la copie et du signal réverbéré est tel que $\Delta\cos\theta = \frac{\lambda}{VT}$ et le rapport (1) ne dépend pas de la durée T de l'impulsion émise : le fait d'augmenter cette durée ne permettrait pas d'augmenter les performances.

Les zones notées C correspondent au cas où il n'y a aucun diffuseur à la fréquence du canal de réception. Dans ce cas les performances sont en général très bonnes, mais elle ne correspond qu'à un nombre restreint de cibles potentielles.

Dans la demande de brevet N° 92 01499 déposée le 11 février 1992 par la Société THOMSON-CSF et publiée le 13 Août 1993 sous le N° 2 687 226, il est décrit un procédé de détection de cibles mobiles dans lequel on émet une suite d'impulsions à fréquences pures. Ses inconvénients tiennent à ce que les performances en zones B restent médiocres et que les fréquences émises dépendent de la vitesse de la cible.

Pour permettre d'obtenir de bonnes performances également dans les zones A et B, tout en conservant les performances des zones C, l'invention propose un procédé de détection d'objets mobiles par un sonar actif en mouvement animé d'une vitesse V, dans lequel on émet un signal de durée T qui est réverbéré par le milieu de transmission en présentant un étalement de spectre dû à la vitesse propre du sonar et on traite ce signal réverbéré par corrélation avec un ensemble de copies du signal d'émission décalées en fréquence pour correspondre à l'ensemble des décalages Doppler susceptibles d'affecter le signal réverbéré, principalement caractérisé en ce que le signal émis est codé en bande large pour présenter un spectre ayant une structure en peigne de raies à des fréquences successives $f_i$ dont l'intervalle séparant deux raies successives $f_i$ et $f_{i+1}$ est fonction de la vitesse V pour être au moins égal à l'étalement de spectre en répondant à la formule :

$$\left(1 - \frac{2V}{c}\right)f_{i+1} - \frac{a}{T} \geq \left(1 + \frac{2V}{c}\right)f_i + \frac{a}{T}$$

où a est un entier compris entre 1 et 2.

Selon une autre caractéristique, le signal codé est formé de N impulsions qui occupent chacune une bande de fréquence B centrée sur une fréquence $f_o$ ; N étant supérieur ou égal à :

$$N \geq \frac{4VT}{c}\left(f_0 - \frac{B}{2}\right)$$

Selon une autre caractéristique, le signal d'émission comprend en outre deux impulsions à des fréquences pures $f_m$ et $f_M$ destinées à permettre une détection des objets en mouvement rapide dont les échos sont situés tant en éloignement qu'en rapprochement au delà de la bande de fréquence occupée par le signal réverbéré ; ces fréquences étant données par les relations :

$$\left(1 + \frac{2V}{c} + \frac{2\left|V_c^{max}\right|}{c}\right)f_m + \frac{2}{T} \leq \left(1 - \frac{2V}{c}\right)f_1 - \frac{2}{T}$$

et

$$\left(1 + \frac{2V}{c}\right)f_1 + \frac{2}{T} \leq \left(1 - \frac{2V}{c} - \frac{2\left|V_c^{max}\right|}{c}\right)f_M - \frac{2}{T}$$

Selon une autre caractéristique, pour que les objets mobiles dont la vitesse est sensiblement égale à l'une des vitesses aveugles des signaux codés en bande large soient détectés par les signaux en fréquences pures, on choisit les fréquences $f_m$ et $f_M$ pour satisfaire en outre les relations :

$$f_M = q\frac{N}{T} \text{ et } f_m = \left(p \pm \frac{\Delta}{2}\right)\frac{N}{T}$$

où $\Delta$ correspond au plus petit intervalle séparant la suite arithmétique de raison p/q de la suite des entiers.

Selon une autre caractéristique, on utilise un procédé dans lequel on choisit $f_m$ et $f_M$ pour satisfaire aux relations :

$$\begin{cases} \left(1+\dfrac{2V}{c}\right)f_1 + \dfrac{2}{T} \le \left(1-\dfrac{2V}{c}-\dfrac{2\left|V_c^{max}\right|}{c}\right)f_m - \dfrac{2}{T} \\[3em] \left(1+\dfrac{2V}{c}\right)f_1 + \dfrac{2}{T} \le \left(1-\dfrac{2V}{c}-\dfrac{2\left|V_c^{max}\right|}{c}\right)f_M - \dfrac{2}{T} \end{cases}$$

Selon une autre caractéristique, on utilise un procédé dans lequel on choisit $f_m$ et $f_M$ pour satisfaire aux relations :

$$\begin{cases} \left(1+\dfrac{2V}{c}+\dfrac{2\left|V_c^{max}\right|}{c}\right)f_m + \dfrac{2}{T} \le \left(1-\dfrac{2V}{c}\right)f_M - \dfrac{2}{T} \\[3em] \left(1+\dfrac{2V}{c}+\dfrac{2\left|V_c^{max}\right|}{c}\right)f_M + \dfrac{2}{T} \le \left(1-\dfrac{2V}{c}\right)f_1 - \dfrac{2}{T} \end{cases}$$

Selon une autre caractéristique, on utilise pour recevoir les signaux réverbérés une antenne acoustique linéaire remorquée.

D'autres particularités et avantages de l'invention apparaîtront clairement dans la description suivante, présentée à titre d'exemple non limitatif en regard des figures annexées qui représentent :

- la figure 1, un diagramme fréquence/direction pour un signal émis à fréquence pure;
- la figure 2, un diagramme semblable à celui de la figure 1 mais correspondant à une rafale de N signaux ;
- la figure 3, un diagramme semblable correspondant à l'émission de deux fréquences pures; et
- la figure 4 un diagramme semblable à celui de la figure 2, des N signaux émis conformément à l'invention.

L'invention propose d'utiliser des signaux codés selon des codes dont le spectre présente une structure dite en peigne de raies.

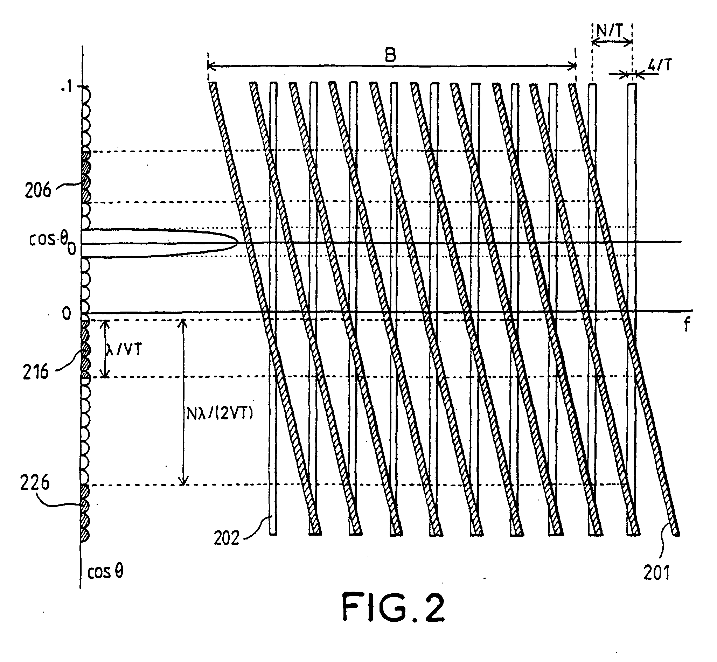

Une telle structure peut être obtenue en émettant un signal large bande périodique, ou par synthèse directe dans le domaine spectral. Supposons par exemple que le code émis consiste en N "sous codes" pondérés en $\cos^2$ ou "motifs élementaires" large bande (FM,BPSK ou autre) identiques, chacun de durée T/N, l'ensemble de la séquence étant pondérée en amplitude sur la durée T. Son spectre, représenté selon un diagramme fréquence/direction comme dans la figure 1, aura alors l'allure représentée sur la figure 2. On observe un peigne de raies 201, chacune de largeur 4/T (entre les premiers zéros), espacées de N/T, et présentant une forte rejection spectrale entre les raies. L'ensemble des raies couvre une largeur de bande B.

En considérant une copie 202 décalée en fréquence pour la détection, on trouve en zone B plusieurs directions angulaires 206, 216, 226 contribuant à l'interspectre entre la copie et la réverbération. En prenant comme variable u = cos θ, ces différentes directions sont espacées de Nλ/2VT. La variable u variant de -1 à +1, le nombre de ces directions est donné par la formule :

$$M = \frac{4VT}{N\lambda} \tag{2}$$

Dans cette zone B, le rapport de l'intensité réverbérée sur l'énergie émise est approximativement égal à :

$$R. \frac{4V_c^{Max}T}{\lambda}\Delta\theta_0\frac{c}{2B}.10^{\frac{-NS}{10}} \tag{3}$$

où:

$V_c$ = vitesse radiale de la cible

$\Delta\theta_0$ = intervalle angulaire de recouvrement des spectres .

Cette formule est valable lorsque $V_c^{Max} \geq 2$ V, ce qui est dans la pratique presque toujours le cas.

Si on la compare à la formule (1), qui a été établie pour le mode fréquence pure dit "FP", on obtient un gain de performances G égal à :

$$G= \frac{cB}{2V_c^{Max}f_0} \tag{4}$$

Avec une bande passante égale au tiers de la fréquence de la porteuse, et une vitesse $V_c^{Max}$ =30 noeuds, on obtient un gain de 9,2 dB. Le gain est d'autant plus faible que la vitesse $V_c^{Max}$ est élevée.

Dans le cas où $V_c^{Max}$< 2V, le gain G vaut $\frac{cB}{4Vf_0}$

Ainsi pour V = 10 noeuds et B/$f_0$ = 1/3, G = 14 dB.

L'invention propose donc d'utiliser un code large bande à peigne de raies adapté à la vitesse du porteur, indépendamment de la vitesse de la cible.

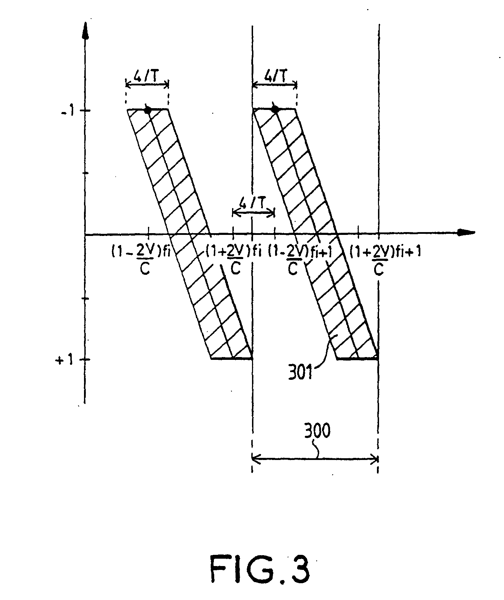

Ce code à large bande, de durée T et de largeur de bande B, est tel que l'espacement entre chaque raie de son spectre est égal à l'étalement fréquentiel de la réverbération associé à la raie provenant uniquement de la vitesse V du porteur, comme représenté sur la figure 3, où la largeur des impulsions 301 a été exagérée par rapport à l'intervalle 300 de variation de la copie.

Pour 2 raies adjacentes, cette condition s'écrit :

$$\left(1 - \frac{2V}{c}\right)f_{i+1} \geq \left(1 + \frac{2V}{c}\right)f_i + \frac{4}{T} \tag{5}$$

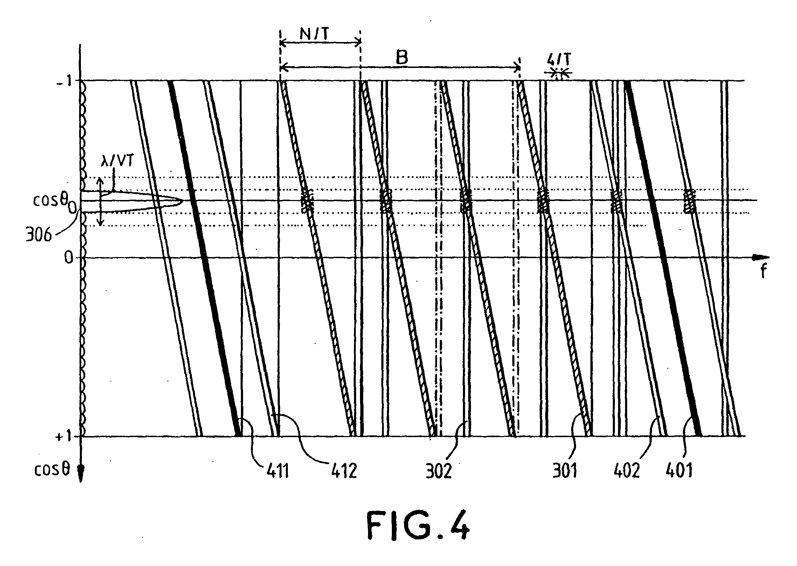

Le diagramme de la direction cos θ en fonction de la fréquence dans ces conditions est représenté sur la figure 4. On remarque qu'une seule direction de réverbération 306 contribue à l'interspectre.

Le code bande large utilisé est composé de N impulsions ayant chacune une bande de largeur B centrée sur la fréquence $f_0$. L'intervalle entre 2 raies adjacentes est tel que $f_{i+1} - f_i$ = N/T. En se plaçant dans le cas le plus défavorable, on obtient à partir de la formule (5).

$$N \geq 4\left[\frac{VT}{c}\left(f_0 + \frac{B}{2}\right) + 1\right] \tag{6}$$

L'optimum est obtenu pour l'égalité.

Afin d'assurer le contrôle des lobes secondaires du spectre émis, ce nombre sera de préférence supérieur à une valeur minimale, égale par exemple à 12. Cette condition correspond alors à des vitesses du porteur vérifiant la condition :

$$V \geq \frac{2C}{Tf_0} \tag{7}$$

Pour des vitesses inférieures, on gardera par souci de simplification cette valeur N = 12.

Dans la formule (5), i varie de 1 à une valeur maximale donnée par:

$$i_{max} = I = E\left(\frac{BT}{N} + 1\right) \qquad (7)$$

où E signifie "partie entière".

A ces 2 valeurs correspondent les 2 fréquences $f_0 - B$ et $f_0 + \frac{B}{2}$

Le traitement en réception de ce code bande large peut se faire de manière classique par corrélation avec des copies qui correspondent à tous les "Doppler cibles" possibles.

En simplifiant la formule (6) à :

$$N \cong \frac{4VT}{c}\left(f_0 + \frac{B}{2}\right)$$

le gain G obtenu en zone B par rapport au mode FP est donné par la formule :

$$G = \frac{BT}{N}\left(1 + \frac{B}{2f_0}\right) \qquad (8)$$

pour $V_c^{Max} < 2V$
et par la formule

$$G = 2\frac{BT}{N}\left(1 + \frac{B}{2f_0}\right)\frac{V}{V_c^{Max}} \qquad (9)$$

pour $V_c^{Max} \geq 2V$.

L'invention propose dans une réalisation préférée, d'utiliser deux codes FP 401 et 411 classiques, chacun de même énergie que le code large bande, dont les fréquences sont situées symétriquement par rapport au spectre du code large bande.

Les fréquences $f_m$ et $f_M$ de ces deux codes sont déterminées de manière à assurer la détection de la cible, par l'un des deux codes, dès que celle-ci est dans la zone C.

Pour cela $f_m$ et $f_M$ doivent respecter les inégalités suivantes :

$$\left(1 + \frac{2V}{c} + \frac{2\left|V_c^{max}\right|}{c}\right) f_m + \frac{2}{T} \leq \left(1 - \frac{2V}{c}\right) f_1 - \frac{2}{T} \qquad (10)$$

et

$$\left(1 + \frac{2V}{c}\right) f_1 + \frac{2}{T} \leq \left(1 - \frac{2V}{c} - \frac{2\left|V_c^{max}\right|}{c}\right) f_M - \frac{2}{T} \qquad (11)$$

Le traitement en réception de ces 2 codes sera identique à celui du code bande large, c'est à dire corrélation avec des copies 402 et 412 qui correspondent aux "Doppler cibles" dans les zones C (en rapprochement pour le code

$f_M$, en éloignement pour le code $f_m$).

Les cibles dont la vitesse radiale V, vérifie la relation :

$$\frac{2|V_r|}{c}f_0 = k\frac{N}{T} \qquad (12)$$

où k est entier, réfléchissent un signal dont le spectre coïncide avec celui de la réverbération dans la direction de la cible, et se trouvent donc en zone A, avec très peu de chances d'être détectées. Ceci correspond comme dans tout système Doppler, à des fréquences aveugles.

Or ces vitesses aveugles correspondent dans tous les cas, compte tenu de l'espacement des fréquences choisi pour le code large bande, à des cibles en zone C (les pires cas correspondent à une cible venant de l'arrière avec une vitesse radiale de 2V, ou une cible venant de l'avant avec une vitesse radiale de -2V). On peut donc selon l'invention les traiter avec des codes FP.

Les performances en zone C sont alors celles du mode FP, à la condition que les spectres des différents codes soient suffisamment disjoints pour pouvoir négliger les interactions mutuelles.

En particulier pour les codes "en rafale", les différentes raies occupent les positions kN/T où k est un entier, et pour certains motifs élémentaire (code FM par exemple). la décroissance du niveau de ces raies est assez lente, de sorte que la réverbération induite par l'émission du code large bande dans la copie FP peut se révéler gênante. C'est en particulier le cas lorsque le spectre de la copie FP intercepte une des raies du spectre de la réverbération associée au code large bande en face du lobe principal de la voie pointée sur la cible. Ceci correspond à une condition donnée par la formule :

$$\left(1 + \frac{2V}{c}\cos\theta_0\right)k\frac{N}{T} = \left(1 + \frac{2V}{c}\cos\theta_0 + \frac{2V_r}{c}\right)f_m \qquad (13)$$

pour la FP basse, ou

$$\left(1 + \frac{2V}{c}\cos\theta_0\right)k'\frac{N}{T} = \left(1 + \frac{2V}{c}\cos\theta_0 + \frac{2V_r}{c}\right)f_M \qquad (14)$$

pour la FP haute.

La valeur de $\frac{2V}{c}\cos\theta_0$ étant petite devant 1, au premier ordre ces égalités deviennent :

$$\left(1 + \frac{2Vr}{c}\right)f_m = k\frac{N}{T} \qquad (15)$$

$$\left(1 + \frac{2Vr}{c}\right)f_M = k'\frac{N}{T} \qquad (16)$$

Les 2 conditions (13) et (14) peuvent se produire simultanément, ce qui n'assure pas alors la détection de la cible par l'un des 2 codes FP en zone C.

Pour y remédier, on peut fixer les valeurs des fréquences à $f_M = q\frac{N}{T}$ et $f_m = p\frac{N}{T} + \delta\frac{N}{T}$ où q et p sont des entiers.

La valeur de $\delta$ est alors telle que $\delta = \pm\frac{\Delta}{2}$, où $\Delta$ correspond au plus petit intervalle séparant la suite arithmétique de raison p/q de la suite des entiers.

Ainsi la détection des cibles ayant un décalage Doppler inférieur à N/T en valeur absolue se fera sur le code large bande, et la détection des autres cibles sur l'un des codes FP.

L'invention fonctionne cependant toujours, mais avec des performances dégradées, lorsque l'on n'utilise qu'une seule de ces 2 fréquences pures.

Dans un exemple de réalisation, on a fabriqué un sonar à antenne linéaire remorquée dont la bande passante disponible à l'émission $\Delta f$ = 600 Hz est centrée sur $f_0$ = 1500 Hz et qui se déplace à la vitesse de V = 4m/s. L'énergie émise correspond à des codes de durée T = 8s, compte tenu du niveau sonore et des portées recherchées.

La bande B étant inférieure à $\Delta f$, on obtient N d'après (6). Donc N = 157,6, d'où N/T = 19,7 Hz que l'on peut arrondir à 20 Hz. Ainsi le code large bande est formé de 160 impulsions de durée 50ms chacune.

Pour les codes FP, on a $f_M$ = 1800 Hz soit q = 90. Donc $f_m$ = 1203,33 Hz, p = 60, p/q = 2/3 et $\Delta$ = 1/3. On en déduit $f_m$ = 1203.33 Hz.

Les inégalités (10) et (11) fournissent $f_1$ = 63 x 20 = 1260 Hz et $f_l$ = 87 x 20 = 1740 Hz. Chaque impulsion du code large bande a donc une bande égale à 480 Hz.

L'émission d'un tel sonar peut alors être formée :

- d'un premier code FP pondéré en amplitude, de durée T = 8s (de 0 à T) et de fréquence $f_m$= 1260Hz
- d'un code large bande pondéré en amplitude, de durée T = 8s (de T/2 à 3T/2) constitué de N=160 impulsions de durée 50 ms et de bande passante B = 480 Hz centrée sur 1500 Hz.
- d'un deuxième code FP pondéré en amplitude, de durée T= 8s (de T à 2T) et de fréquence $f_M$ = 1800Hz

En réception, on effectue alors les traitements suivants :

- formation de voies;
- dans chaque voie formée, filtrage adapté dont la nature des copies dépend de l'intervalle fréquentiel considéré;
- pour les vitesses radiales des cibles $V_r$ telles que :

$$-\frac{N}{T} \leq \frac{2V_r}{c} f_l \leq \frac{N}{T} \qquad (18)$$

   les copies sont générées en effectuant un décalage Doppler du code émis large bande avec les paramètres Doppler correspondant à l'intervalle 2N/T.
- pour les autres vitesses $V_r$ telles que :

$$\frac{2|V_r|}{c} f_l > \frac{N}{T} \qquad (19)$$

   les copies sont générées par décalage Doppler des fréquences $f_m$ et $f_M$ avec les paramètres Doppler correspondants.

Le filtrage adapté du signal reçu est effectué simultanément avec toutes les copies ainsi générées et on applique les processus de normalisation et de détection connus de l'art antérieur.

A titre de variante, on peut synthétiser directement le code large bande en utilisant la formule suivante:

$$e(t) = \sum_{i=0}^{I} a_i \cos(2\pi f_i t + \phi_i) \, env\left(\frac{t}{T}\right) \qquad (20)$$

dans laquelle :

$$\left(1 - \frac{2V}{c}\right) f_{i+1} = \left(1 + \frac{2V}{c}\right) f_i + \frac{4}{T} \qquad (21)$$

avec

$$i = 1 \,;\, i_{Max} = E\left(\frac{BT}{N} + 1\right)$$

Dans ces formules les termes $(a_i, \phi_i)$ sont optimisés de façon à ce que le code ait une énergie constante entre 0 et T. Le terme env (x) est la pondération d'amplitude non nulle de 0 à T.

On peut aussi choisir de regrouper les fréquences FP du même côté du spectre du code large bande. Les conditions deviennent alors :

$$\left(1+\frac{2V}{c}\right)f_1 + \frac{2}{T} \leq \left(1 - \frac{2V}{c} - \frac{2\left|V_c^{max}\right|}{c}\right)f_m - \frac{2}{T} \qquad (22)$$

$$\left(1+\frac{2V}{c}\right)f_m + \frac{2}{T} \leq \left(1 - \frac{2V}{c} - \frac{2\left|V_c^{max}\right|}{c}\right)f_M - \frac{2}{T} \qquad (23)$$

ou

$$\left(1+\frac{2V}{c} + \frac{2\left|V_c^{max}\right|}{c}\right)f_m + \frac{2}{T} \leq \left(1 - \frac{2V}{c}\right)f_M - \frac{2}{T} \qquad (24)$$

$$\left(1+\frac{2V}{c} + \frac{2\left|V_c^{max}\right|}{c}\right)f_M + \frac{2}{T} \leq \left(1 - \frac{2V}{c}\right)f_1 - \frac{2}{T} \qquad (25)$$

## Revendications

1. Procédé de détection d'objets mobiles par un sonar actif en mouvement animé d'une vitesse V, dans lequel on émet un signal de durée T qui est réverbéré par le milieu de transmission en présentant un étalement de spectre dû à la vitesse propre du sonar et on traite ce signal réverbéré par corrélation avec un ensemble de copies du signal d'émission décalées en fréquence pour correspondre à l'ensemble des décalages Doppler susceptibles d'affecter le signal réverbéré, **caractérisé en ce que** le signal émis est codé en bande large pour présenter un spectre ayant une structure en peigne de raies à des fréquences successives $f_i$ dont l'intervalle séparant deux raies successives $f_i$ et $f_{i+1}$ est fonction de la vitesse V pour être au moins égal à l'étalement de spectre en répondant à la formule :

$$\left(1 - \frac{2V}{c}\right)f_{i+1} - \frac{a}{T} \geq \left(1 + \frac{2V}{c}\right)f_i + \frac{a}{T}$$

où a est un entier compris entre 1 et 2, et **en ce que** le signal d'émission comprend en outre deux impulsions à des fréquences pures $f_m$ et $f_M$ destinées à permettre une détection des objets en mouvement rapide dont les échos sont situés tant en éloignement qu'en rapprochement au delà de la bande de fréquence occupée par le signal réverbéré; ces fréquences étant données par les relations :

$$\left(1 + \frac{2V}{c} + \frac{2\left|V_c^{max}\right|}{c}\right) f_m + \frac{2}{T} \leq (1 - \frac{2V}{c}) f_1 - \frac{2}{T}$$

et

$$\left(1 + \frac{2V}{c}\right) f_1 + \frac{2}{T} \leq \left(1 - \frac{2V}{c} - \frac{2\left|V_c^{max}\right|}{c}\right) f_M - \frac{2}{T}$$

**2.** Procédé selon la revendication 1, **caractérisé en ce que** le signal codé est formé de N impulsions qui occupent chacune une bande de fréquence B centrée sur une fréquence $f_0$ ; N étant supérieur ou égal à :

$$N \cong \frac{4VT}{c}\left(f_0 + \frac{B}{2}\right)$$

**3.** Procédé selon l'une quelconque des revendications 1 et 2, **caractérisé en ce que** pour que les objets mobiles dont la vitesse est sensiblement égale à l'une des vitesses aveugles des signaux codés en bande large soient détectés par les signaux en fréquences pures, on choisit les fréquences $f_m$ et $f_M$ pour satisfaire en outre les relations :

$$f_M = q\,\frac{N}{T} \quad \text{et}\ f_m = \left(p \pm \frac{\Delta}{2}\right)\frac{N}{T}$$

où $\Delta$ correspond au plus petit intervalle séparant la suite arithmétique de raiosn p/q de la suite des entiers.

**4.** Procédé selon l'une quelconque des revendications 1 et 2, dans lequel on choisit $f_m$ et $f_M$ pour satisfaire aux relations :

$$\begin{cases} \left(1 + \frac{2V}{c}\right) f_1 + \frac{2}{T} \leq \left(1 - \frac{2V}{c} - \frac{2\left|V_c^{max}\right|}{c}\right) f_m - \frac{2}{T} \\[4mm] \left(1 + \frac{2V}{c}\right) f_m + \frac{2}{T} \leq \left(1 - \frac{2V}{c} - \frac{2\left|V_c^{max}\right|}{c}\right) f_M - \frac{2}{T} \end{cases}$$

**5.** Procédé selon l'une quelconque des revendications 1 et 2, dans lequel on choisit $f_m$ et $f_M$ pour satisfaire aux relations :

$$\begin{cases} \left(1 + \dfrac{2V}{c} + \dfrac{2\left|V_c^{max}\right|}{c}\right)f_m + \dfrac{2}{T} \leq \left(1 - \dfrac{2V}{c}\right)f_M - \dfrac{2}{T} \\[4ex] \left(1 + \dfrac{2V}{c} + \dfrac{2\left|V_c^{max}\right|}{c}\right)f_M + \dfrac{2}{T} \leq \left(1 - \dfrac{2V}{c}\right)f_1 - \dfrac{2}{T} \end{cases}$$

6. Procédé selon l'une quelconque des revendications 1 à 5, **caractérisé en ce que** l'on utilise pour recevoir les signaux réverbérés une antenne acoustique linéaire remorquée.

**Patentansprüche**

1. Verfahren zum Erfassen beweglicher Objekte durch ein aktives Sonar, das zu einer Bewegung mit einer Geschwindigkeit V angetrieben wird, bei dem ein Signal der Dauer T ausgesendet wird, das durch das Übertragungsmedium reflektiert wird und dabei aufgrund der Eigengeschwindigkeit des Sonars eine Spektrumerweiterung aufweist, und bei dem dieses reflektierte Signal verarbeitet wird, indem es mit einer Gesamtheit von Kopien des Sendesignals korreliert wird, die frequenzverschoben sind, um der Gesamtheit der Doppler-Verschiebungen zu entsprechen, die für die Beeinflussung des reflektierten Signals geeignet sind, **dadurch gekennzeichnet, daß** das ausgesendete Signal breitbandcodiert wird, damit es ein Spektrum aufweist, das eine Linien-Kammstruktur mit aufeinerfolgenden Frequenzen $f_i$ besitzt, wobei das Intervall, das zwei aufeinanderfolgende Linien $f_i$ und $f_i$ +1 trennt, von der Geschwindigkeit V abhängt, damit es wenigstens gleich der Spektrumerweiterung ist, indem es die folgende Formel erfüllt:

$$\left(1 - \frac{2V}{c}\right)f_{i+1} - \frac{a}{T} \geq \left(1 + \frac{2V}{c}\right)f_i + \frac{a}{T}$$

wobei a eine ganze Zahl im Bereich von 1 bis 2 ist und daß das Sendesignal außerdem zwei Impulse mit unveränderten Frequenzen $f_m$ und $f_M$ enthält, die dazu bestimmt sind, eine Erfassung von in schneller Bewegung befindlichen Objekten zu ermöglichen, deren Echos sich sowohl bei der Entfernung als auch bei der Annäherung jenseits des Frequenzbandes befinden, das von dem reflektierten Signal belegt wird; wobei diese Frequenzen durch die folgenden Beziehungen gegeben sind:

$$\left(1 + \frac{2V}{c} + \frac{2\left|v_c^{max}\right|}{c}\right)f_m + \frac{2}{T} \leq \left(1 - \frac{2V}{c}\right)f_1 - \frac{2}{T}$$

und

$$\left(1 + \frac{2V}{c}\right)f_1 + \frac{2}{T} \leq \left(1 - \frac{2V}{c} - \frac{2\left|v_c^{max}\right|}{c}\right)f_M - \frac{2}{T}$$

2. Verfahren nach Anspruch 1, **dadurch gekennzeichnet, daß** das codierte Signal aus N Impulsen gebildet ist, die jeweils ein Frequenzband B belegen, das bei einer Frequenz $f_0$ zentriert ist; wobei N größer oder gleich

$$N \cong \frac{4VT}{c}\left(f_0 + \frac{B}{2}\right)$$

ist.

3. Verfahren nach einem der Ansprüche 1 und 2, **dadurch gekennzeichnet, daß**, um die beweglichen Objekte, deren Geschwindigkeit im wesentlichen gleich einer der Blindgeschwindigkeiten der im Breitband codierten Signale sind, durch die Signale mit unveränderten Frequenzen erfassen zu können, die Frequenzen $f_m$ und $f_M$ so gewählt werden, daß sie außerdem die folgenden Beziehungen erfüllen:

$$f_M = q\frac{N}{T} \quad \text{und} \quad f_m = \left(p \pm \frac{\Delta}{2}\right)\frac{N}{T}$$

wobei $\Delta$ dem kleinsten Intervall entspricht, das die arithmetische Folge mit Verhältnis $p/q$ von der Folge der ganzen Zahlen trennt.

4. Verfahren nach einem der Ansprüche 1 und 2, in dem $f_m$ und $f_M$ so gewählt werden, daß sie die folgenden Beziehungen erfüllen:

$$\left(1 + \frac{2V}{c}\right)f_1 + \frac{2}{T} \leq \left(1 - \frac{2V}{c} - \frac{2\left|v_c^{max}\right|}{c}\right)f_m - \frac{2}{T}$$

$$\left(1 + \frac{2V}{c}\right)f_m + \frac{2}{T} \leq \left(1 - \frac{2V}{c} - \frac{2\left|v_c^{max}\right|}{c}\right)f_M - \frac{2}{T}$$

5. Verfahren nach einem der Ansprüche 1 und 2, in dem $f_m$ und $f_M$ so gewählt werden, daß sie die folgenden Beziehungen erfüllen:

$$\left(1 + \frac{2V}{c} + \frac{2\left|v_c^{max}\right|}{c}\right)f_m + \frac{2}{T} \leq \left(1 - \frac{2V}{c}\right)f_M - \frac{2}{T}$$

$$\left(1 + \frac{2V}{c} + \frac{2\left|v_c^{max}\right|}{c}\right)f_M + \frac{2}{T} \leq \left(1 - \frac{2V}{c}\right)f_1 - \frac{2}{T}$$

6. Verfahren nach einem der Ansprüche 1 bis 5, **dadurch gekennzeichnet, daß** für den Empfang der reflektierten Signale eine geschleppte, lineare akustische Antenne verwendet wird.

**Claims**

1. A process for detecting moving objects by an active sonar moving at a velocity V, in which a signal of duration T is transmitted, which signal is reverberated by the transmission medium, having a spectral spread due to the actual speed of the sonar and this reverberated signal is processed by correlation with a set of frequency-shifted copies of the transmission signal in order to correspond to the set of Doppler shifts capable of affecting the reverberated signal, **characterized in that** the transmitted signal is broadband encoded in order to present a spectrum having a comb-of-lines structure at successive frequencies $f_i$, the interval separating two successive lines $f_i$ and $f_{i+1}$ of which is a function of the velocity V in order to be at least equal to the spectrum spread by satisfying the formula:

$$\left(1-\frac{2V}{c}\right)f_{i+1}-\frac{a}{T}\geq\left(1+\frac{2V}{c}\right)f_i+\frac{a}{T}$$

where a is an integer between 1 and 2, and **in that** the transmission signal also comprises two pulses at pure frequencies $f_m$ and $f_M$ intended to make it possible to detect fast moving objects, the echoes from which are located beyond the frequency band occupied by the reverberated signal, both when receding and when approaching, these frequencies being given by the equations:

$$\left(1+\frac{2V}{c}+\frac{2\left|V_c^{max}\right|}{c}\right)f_m+\frac{2}{T}\leq(1-\frac{2V}{c})f_1-\frac{2}{T}$$

and

$$\left(1+\frac{2V}{c}\right)f_1+\frac{2}{T}\leq\left(1-\frac{2V}{c}-\frac{2\left|v_c^{max}\right|}{c}\right)f_M-\frac{2}{T}\ .$$

2. The process as claimed in claim 1, **characterized in that** the encoded signal is formed by N pulses, each of which occupies a frequency band B centered on a frequency $f_0$, where N is greater than or equal to:

$$N\cong\frac{4VT}{c}\left(f_0+\frac{B}{2}\right)\ .$$

3. The process as claimed in any one of claims 1 and 2, **characterized in that**, in order for the moving objects, whose speed is approximately equal to one of the blind speeds of the broadband encoded signals, to be detected by the pure-frequency signals, the frequencies $f_m$ and $f_M$ are chosen to satisfy, in addition, the equations:

$$f_M\ =\ q\,\frac{N}{T}\,and\,f_m\ =\ \left(p\pm\frac{\Delta}{2}\right)\frac{N}{T}$$

where $\Delta$ corresponds to the smallest interval separating the arithmetic series of the p/q ratio from the series of integers.

4. The process as claimed in any one of claims 1 and 2, in which $f_m$ and $f_M$ are chosen so as to satisfy the equations:

$$
\begin{cases}
\left(1+\dfrac{2V}{c}\right)f_l \div \dfrac{2}{T} \leq \left(1-\dfrac{2V}{c}-\dfrac{2\left|V_c^{max}\right|}{c}\right)f_m - \dfrac{2}{T} \\[3em]
\left(1+\dfrac{2V}{c}\right)f_m + \dfrac{2}{T} \leq \left(1-\dfrac{2V}{c}-\dfrac{2\left|V_c^{max}\right|}{c}\right)f_M - \dfrac{2}{T}
\end{cases}
$$

5. The process as claimed in any one of claims 1 and 2, in which $f_m$ and $f_M$ are chosen so as to satisfy the equations:

$$
\begin{cases}
\left(1+\dfrac{2V}{c} \div \dfrac{2\left|V_c^{max}\right|}{c}\right)f_m + \dfrac{2}{T} \leq \left(1-\dfrac{2V}{c}\right)f_M - \dfrac{2}{T} \\[3em]
\left(1+\dfrac{2V}{c} + \dfrac{2\left|V_c^{max}\right|}{c}\right)f_M + \dfrac{2}{T} \leq \left(1-\dfrac{2V}{c}\right)f_1 - \dfrac{2}{T}
\end{cases}
$$

6. The process as claimed in any one of claims 1 to 5, **characterized in that** a towed linear acoustic antenna is used to receive the reverberated signals.

FIG.1

FIG.2

FIG.3

FIG.4